# EUROPEAN PATENT SPECIFICATION

(11) **EP 1 460 292 B1**
(45) Date of publication and mention of the grant of the patent: **14.12.2005**
(21) Application number: 03251613.0
(22) Date of filing: 17.03.2003
(51) Int. Cl.: F16C 27/06, F16F 1/38

(54) **Laminated bushing**
Buchse aus Schichtwerkstoff
Coussinet lamifié

(43) Date of publication of application: 22.09.2004
(73) Proprietor: Meritor Light Vehicle Technology, LLC, Troy, Michigan 48084 (US)
(72) Inventor: Carlstedt, Robert, Rochaester Hills, Michigan 48306 (US); Whitney, Daniel Eugene, Arlington, Massachusetts (US); Smith, Mark, Troy, Michigan 48084 (US); Geib, Eric Stephen, Fenton, Michigan 48430 (US); Foster, Steven, Rochester, Michigan 48306 (US); Clisch, Richard, Canton, Michigan 48187 (US); Shih, Shan, Troy, Michigan 48098 (US); Marcos Munoz, Juan Jose, 31180 Cizur Mayor (Navara), Pamplona (ES)
(74) Representative: Jones, John Bryn

(56) References cited:
- US-A- 3 071 422
- US-A- 3 235 941
- US-A- 3 750 249
- US-A- 3 869 113

## Description

### BACKGROUND OF THE INVENTION

This invention relates to a resilient joint bushing for use in joining two structural members.

Typically, a bushing is used to connect two structural members that move relative to one anther. Normally, bushings include an inner sleeve of a predetermined diameter secured to one of the structural members and an outer sleeve having a diameter larger then the inner sleeve. In one type of bushing, the inner sleeve is suspended within the outer sleeve in a concentric manner by a resilient and deformable material. The deformable material is typically bonded to both the inner and outer sleeves. The deformable material disposed between the inner and outer sleeves allows a discrete amount of movement. The movement between inner and outer sleeves may be longitudinal or rotational. Such bushings dampen the transmission of vibrations from one structural member to another reducing noise created by such vibrations. This type of bushing does not direct motion between the structural parts.

One other type of bushing is a laminated bushing. Sheets of metal and deformable material are layered to form this type of bushing. The laminated bushing can have greater strength and durability properties than the above-mentioned bushing. Further, laminated bushings may be constructed in a manner that can aid in the direction of movement between structural members. This is accomplished by layering the alternating metal sheets to provide for shear in only desired directions. Laminated bushings however are costly in comparison to typical bushings.

US3235941 shows a method of winding together an elastomeric material and a metal sheet to provide a bush.

For these reasons, it is desirable to develop a low cost laminated bushing to provide additional strength and durability while providing a cost efficient alternative to conventional bushings.

### SUMMARY OF THE INVENTION

One disclosed embodiment of this invention is a laminated bushing formed by spirally winding a metal sheet with a resilient material to provide a of motion proportional to an applied force.

The laminated bushing includes a metal sheet spirally wound about a first longitudinal axis forming a spirally shaped cavity. A deformable resilient material such as rubber is disposed on one side of the metal sheet and within the cavity. The metal sheet forming the spiral shaped cavity may mechanically compress the resilient material disposed within the cavities. Alternatively, the resilient material can be vulcanized once within the laminated bushing is formed. The spirally wound laminated bushing includes inner and outer sleeves concentric about the longitudinal axis and that move relative to one another in direct proportion to the material deformation properties of the resilient material disposed between the metal sheet. However, because the resilient material is alternatively layered with the metal sheet the direction of movement between the inner sleeve and the outer sleeve is controlled by the specific configuration of the laminated bushing.

The configuration of the laminated bushing can be adapted to provide various directions of movement between two fastened structural members. In one embodiment, the inner sleeve is concentric with the outer sleeve. The outer sleeve forms a continuous cylinder and movement of the inner sleeve relative to the outer sleeves can occur in many planes.

According to the invention, the laminated bushing includes a plurality of grooves disposed annularly about the longitudinal axis. Movement of the resilient material is resisted at a greater rate in a direction across or perpendicular to the grooves. In this way the grooves can be configured to direct motion between the two structural members by increasing resistance to movement across the grooves. Further embodiments include grooves that are disposed along the longitudinal axis, and grooves that are spirally wound about longitudinal axis.

The invention includes the method of constructing a spirally wound bushing including the steps of bonding a resilient deformable material to a least one side of a metal sheet, then rolling the metal sheet over itself about a longitudinal axis such that a plurality of spirally wound cavities are formed. The method further includes forming the spirally wound cavities such that the resilient deformable material is compressed within the spiral cavities, and forming a plurality of mechanically formed grooves within said metal sheet.

The laminated bushing of the subject invention provide the benefits of increased strength and durability along with providing a means of directionally controlling movement of a structural member.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 is a perspective view of a spirally wound laminated bushing;
Figure 2 is a perspective view of another embodiment of the laminated bushing including annular grooves;
Figure 3 is a perspective view of another embodiment of the laminated bushing with longitudinal grooves;
Figure 4, is another embodiment of the laminated bushing including spiral grooves;
Figure 5 is a perspective view of the spirally wound laminated bushing installed in a leaf spring bracket assembly;
Figure 6, is a perspective view of another application of the laminated bushing to support a stabilizer bar;
Figure 7, is a perspective view of another application of the laminated bushing installed in upper and lower control arms of a wheel assembly;
Figure 8 is a plan view of a laminated bushing used as a hinge mechanism for a door.
Figure 9A-9D are schematic views of the method steps for fabricating the spirally wound laminated bushing; and
Figure 10 is a perspective view the method step of cutting a laminated bushing to a required length.

### DETAILED DESCRIPTION OF THE PREFERRED EMBODIMENT

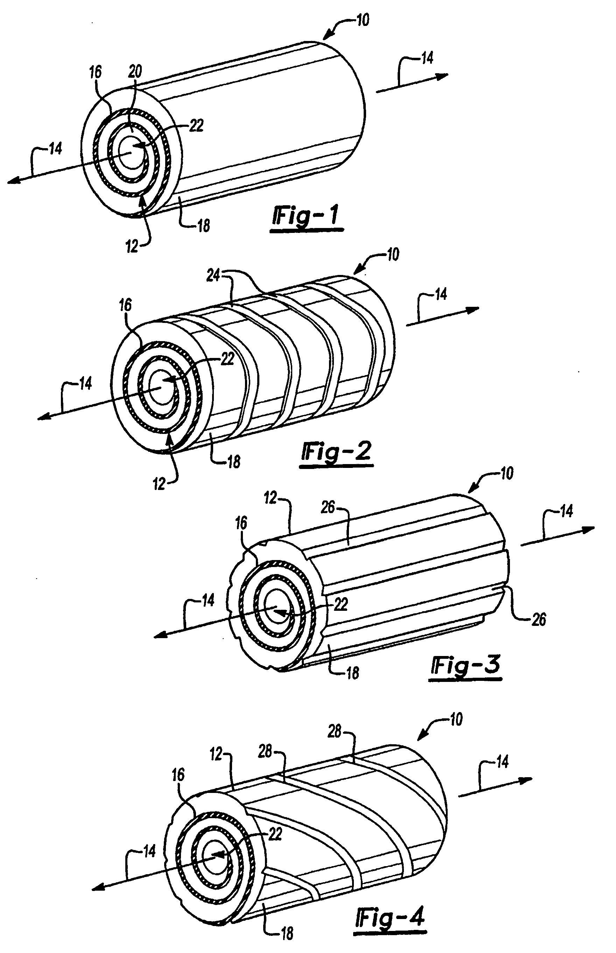

Referring to the Figures, wherein like numerals indicate like or corresponding parts throughout the several views and embodiments, a laminated bushing generally indicated at 10 is shown in Figure 1. The laminated bushing 10 includes a metal sheet 12 spirally wound about a longitudinal axis 14 to form a spirally shaped cavity 20. A resilient material 16 such as rubber is disposed between the metal sheet 12 and within the spiral shaped cavity 20. Preferably, the resilient material 16 is mechanically compressed between the metal sheets 12. Alternatively, the resilient material 16 can be rubber that is vulcanized after formation of the bushing 10. It should be understood that the resilient material 16 could be of any type known in the art. Preferably, the inner sleeve 22 is rotatable relative to an outer sleeve 18 in a proportional manner related to the specific material properties of the resilient material 16. The spirally wound metal sheet 12 is inserted into the outer sleeve 18. The inner sleeve 22 is formed concentric with the outer sleeve 18 about the longitudinal axis 14. The inner sleeve 22 is movable along the longitudinal axis 14 relative to the outer sleeve18 in a proportional manner dependent on the specific properties of the resilient material 16.

Referring to Figure 2, another embodiment of the laminated bushing includes a plurality of mechanically formed grooves 24. The grooves 24 are formed at intervals along the axis 14 of the laminated bushing 10. Preferably, the grooves 24 are part of the metal sheet and become an integral part of the laminated bushing throughout the entire spirally wound bushing 10. The grooves 24 direct movement of the inner sleeve 22 relative to the outer sleeve 18 by increasing the resistance to movement in a direction across or perpendicular to the grooves 24. The grooves 24 increase resistance of the resilient material 16 in a direction perpendicular to the grooves 24. In this embodiment, the grooves 24 are arranged at intervals about the longitudinal axis 14 to increase resistance to movement of the inner sleeve 22 along the longitudinal axis 14 relative to the outer sleeve 18.

Referring to Figure 3, another embodiment including a plurality of grooves 26 is disclosed. In this embodiment, the grooves 26 are positioned longitudinally throughout the entire laminated bushing 10. The grooves are formed within the metal sheet 12 to direct movement of the inner sleeve 22 relative to the outer sleeve 18 by increasing resistance to motion perpendicular to the grooves 26. The longitudinal grooves 26 resist rotational movement of the inner sleeve 22 relative to the outer sleeve 18 thereby encouraging movement along the longitudinal axis 14. Movement along the longitudinal axis 14 would be such that the inner sleeve 22 moves in a telescoping motion relative to the outer sleeve 18.

Referring to Figure 4, another embodiment of the laminated bushing 10 is shown. The laminated bushing includes a plurality of spirally wound grooves 28 within the metal sheet 12 such that the resilient material 16 is directed for both rotational and axial movement. The spirally wound groves 28 direct the inner sleeve 22 to rotate about the longitudinal axis 14 in proportion to movement along the longitudinal axis 14. The spirally wound grooves 28 direct movement of the inner sleeve 22 relative to the outer sleeve 18 along the longitudinal axis 14 in proportion to rotation about the longitudinal axis 14. In other words, the inner sleeve 22 has a lower resistance to movement in a telescoping, rotational manner relative to the outer sleeve 18.

The laminated bushings 10 enable control of the direction of motion by using alternating layers of metal sheet 12 and resilient material 16 with or without the formed geometry. The embodiments of the laminated bushing described and shown in Figures 1-4 are only examples of various geometric configurations integrally formed to the laminated bushing 10 to control motion of the inner sleeve 22 relative to the outer sleeve 18. It should be understood that it is within the contemplation of this invention that the grooves may be of any configuration known to a worker skilled in the art such that the direction of motion can be controlled dependent on a specific application. The laminated bushing 10 can be incorporated into any application in which bushings are currently being used such as for joining of various suspension components.

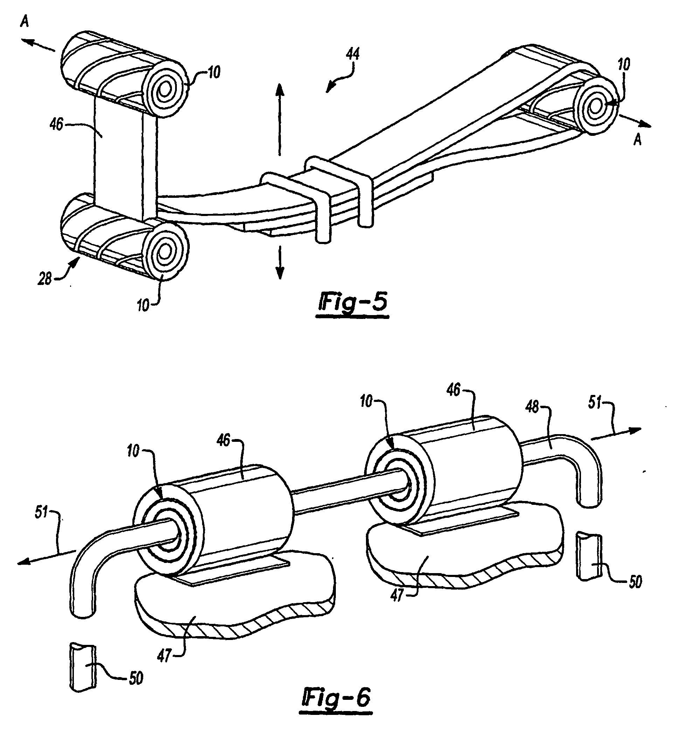

Referring to Figure 5, a leaf spring assembly 44 is shown including the laminated bushings 10 having spirally wound grooves 28. The laminated bushings 10 enable control of the direction of motion to assist in the changing wheel alignment by changing chamber, castor, toe and the like. The laminated bushings 10 are part of the hanger bracket 46 and move proportionally in response to compression of the leaf spring assembly 44. Movement of the leaf spring assembly 44 can be used to direct movement of the leaf spring assembly 44 to adjust over-steer or under-steer. The laminated bushings 10 are arranged such that compression of the leaf spring 44 moves the rear bushing in one direction and moves the front bushing in the opposite direction to provide a pivoting movement of the entire leaf spring assembly 44 as shown by the arrows A.

Referring to Figure 6, in this embodiment the laminated bushings 10 secure mounting brackets 46 for a stabilizer bar 48 to direct and control movement of the stabilizer bar 48 proportionally to an applied force. The stabilizer bar 48 is mounted within the laminated bushings 10 that are in turn mounted to the body of the motor vehicle schematically shown as 47. The ends of the stabilizer bar 50 are attached to a wheel assembly (Not Shown) of the motor vehicle such that during a turn one arm of the stabilizer bar is twisted to transmit a counter rotational force across the vehicle to a side opposite the turn to inhibit roll of the body of the motor vehicle 47. The laminated bushings 10 controls the amount of rotation in proportional response to the applied forces such that a roll rate of the vehicle body 47 is controlled. In this embodiment the laminated bushings 10 can include spirally wound grooves 28 to control linear movement along an axis 51 as well as rotational movement.

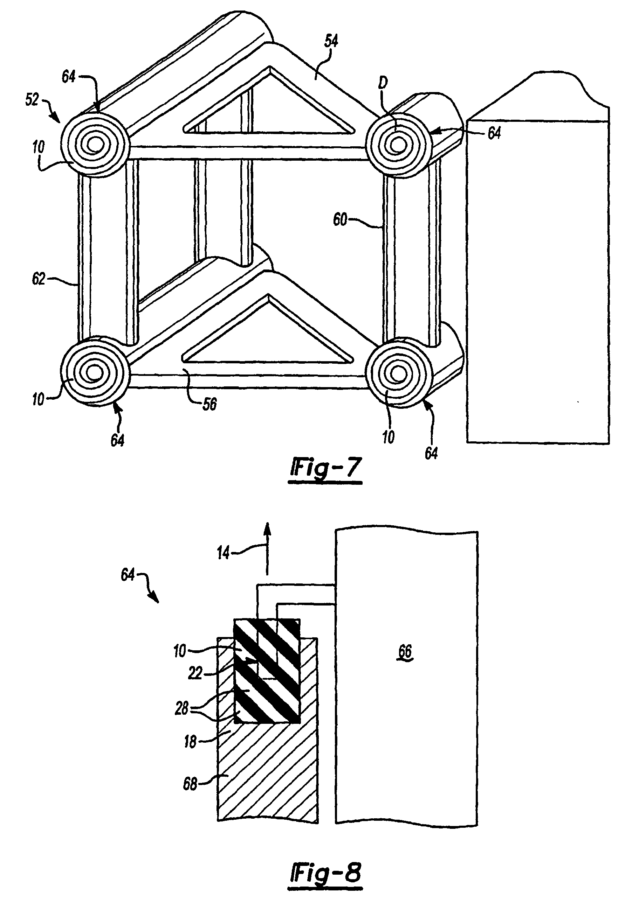

Referring to Figure 7, a wheel assembly 52 including upper and lower control arms 54, 56 pivotally attached to a frame member 62 at one end and to a spindle arm 60 opposite the frame member 62. Each pivotal connection 64 includes a laminated bushing 10. The laminated bushings are configured to direct and control relative movement between the upper, lower, and spindle arms 54,56, and 60 in response to forces applied to each pivotal connection 64 by movement of the wheel assembly 52.

Referring to Figure 8, another embodiment of the laminated bushing 10 is shown as a door hinge 64 to allow directional motion of the door as well as providing a means of holding a door 66 open in various intermediate positions. The laminated bushing 10 is mounted vertically along an axis 14 and includes spirally wound grooves 28. The laminated bushing 10 is mounted to a support 68 such that the weight of a door 66 is exerted downward onto the laminated bushing 10. The spirally wound grooves 28 are disposed on the laminated bushing 10 such that opening of the door 66 moves the inner sleeve 22 upwardly an amount proportional to the amount in which the door 66 is opened or rotated. The weight of the door 66 exerts a force downward on the laminated bushing 10 such that the door 66 will be directed to rotate toward a closed position. The downward force exerted on the laminated bushing 10 causes the door 66 to rotate toward the closed position.

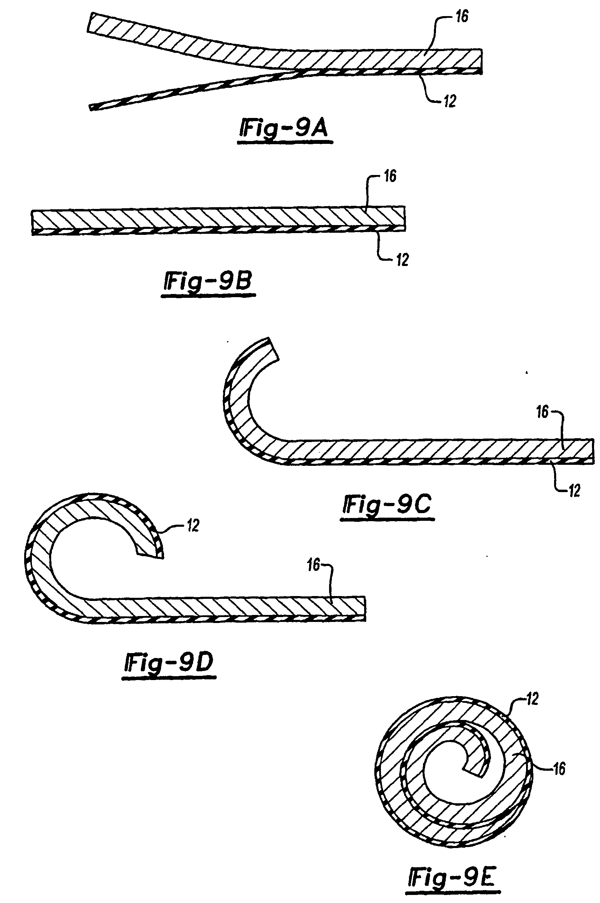

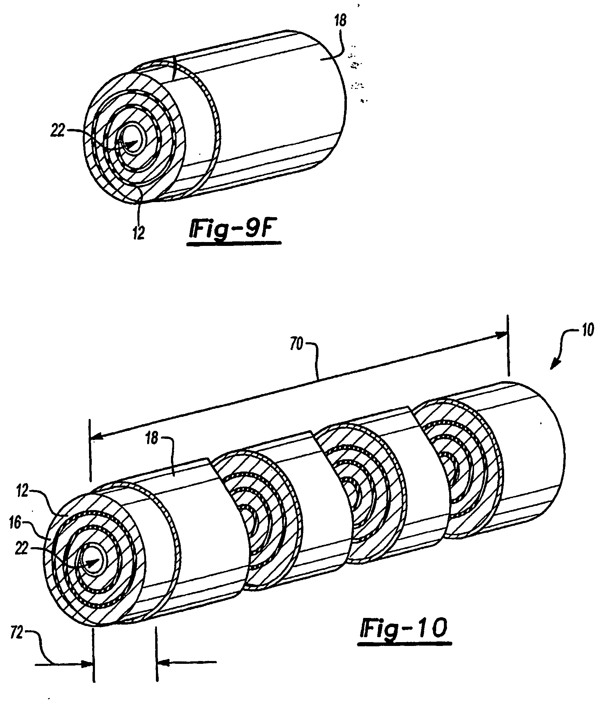

Referring to Figures 9A-9D, the invention also includes a method of forming the laminated bushing 10 including the steps of affixing a resilient material to the metal sheet. The resilient material 16 may be affixed by any means known in the art such as utilizing adhesive or coating a metal sheet 12 with the resilient material 16. The resilient material 16 and metal sheet 12 are in turn spirally wound back about the longitudinal axis 14 to form a spirally shaped cavity 20 with the metal sheet 12 such that the resilient material 16 is disposed within the spirally shaped cavity 20. The spirally wound metal sheet and resilient material 16 is in turn inserted between an inner sleeve 22 and an outer sleeve 18. Alternatively, the metal sheet 12 may be secured back onto itself to form the inner and outer sleeves 22,18 from a common metal sheet 12. Preferably, the inner sleeve 22 is preferably concentric with the outer sleeve 18.

The resilient material 16 is mechanically compressed within the spirally shaped cavity 20 during the winding step to form alternating layers of metal sheet 12 and resilient material 16. Alternatively, the resilient material 16 is composed of rubber and adhered to the metal sheet 12 by a vulcanization process as is known in the art. The vulcanized resilient material 16 adheres to the metal sheet 12 of the laminated bushing 10.

The method also includes the step of mechanically forming a plurality of grooves within the metal sheet. As discussed hereinabove, the grooves 24 may be of any configuration and extend in any direction. The resilient material is then adhered to the metal sheet 12 and wound to form the spiral cavity 20.

Referring to Figure 10, the method also includes the step of forming a length 72 of laminated bushings 10. The laminated bushing 10 may be formed from a metal sheet having a length 70 longer than that required for a specific application, then cut into smaller required lengths 72.

The foregoing description is exemplary and not just a material specification. The invention has been described in an illustrative manner, and should be understood that the terminology used is intended to be in the nature of words of description rather than of limitation. Many modifications and variations of the present invention are possible in light of the above teachings. The preferred embodiments of this invention have been disclosed, however, one of ordinary skill in the art would recognize that certain modifications are within the scope of this invention. It is understood that within the scope of the appended claims, the invention may be practiced otherwise than as specifically described. For that reason, the following claims should be studied to determine the true scope and content of this invention.

## Claims

1. A laminated bushing assembly (10) comprising;
an inner (22) and outer (18) sleeve concentric about an axis (14);
a spirally shaped cavity (20) disposed between said inner and outer sleeves, wherein said inner sleeve (22), outer sleeve (18) and said spirally shaped cavity (20) are formed from metal sheet (12),
a resilient material(16) disposed within said spirally shaped cavity to control relative movement between said inner and outer sleeves **characterised in that** the bushing further includes a plurality of grooves (24, 26, 28) disposed in said metal sheet such that resistance to movement of said resilient material in a direction transverse to said grooves is greater than resistance to movement in a direction substantially parallel to said grooves.

2. The bushing of claim 1, wherein said inner sleeve (22) and said spirally shaped cavity (20) are formed from a common metal sheet (12).

3. The bushing of claim 1 or 2, wherein said resilient material (16) is adhered to said metal sheet (12).

4. The assembly of claim 1 or 2 or 3, wherein said resilient material (16) disposed within said spirally shaped cavity (20) is mechanically compressed by said metal sheet (12).

5. The assembly of any preceding claim, wherein said resilient material (16) is vulcanized rubber.

6. The bushing of any preceding claim, wherein said pluralities of grooves (24) are disposed perpendicular to said axis (14).

7. The bushing of any one of claims 1 to 5, wherein said plurality of grooves (26) are disposed parallel to said axis (14).

8. The bushing of any one of claims 1 to 5, wherein said plurality of grooves (28) are disposed spirally along said axis (14).

9. A suspension assembly for a motor vehicle comprising;
a mount attached to said motor vehicle;
a suspension member (44, 52, 48) attached to said mount; and
a laminated bushing assembly (10) mounted between said mount and said suspension member to control movement of said suspension member relative to said mount;
said laminated bushing assembly (10) including a metal sheet (12) spirally wound about a longitudinal axis (14) to form a spirally shaped cavity (20) disposed within an outer sleeve (18), and a resilient material (16) disposed within said spirally shaped cavity and between said spirally wound metal sheet wherein said laminated bushing includes a plurality of grooves (24, 26, 28) disposed in said metal sheet such that resistance to movement of said resilient material in a direction transverse to said grooves is greater than resistance to movement in a direction substantially parallel to said grooves.

10. The assembly of claim 9, wherein said pluralities of grooves (24) are disposed perpendicular to said longitudinal axis (14).

11. The assembly of claim 9, wherein said plurality of grooves (26) are disposed parallel to said longitudinal axis (14).

12. The assembly of claim 9, wherein said plurality of grooves (28) are disposed spirally along said longitudinal axis.

13. The assembly of any one of claims 9 to 12, where said suspension member is a leaf spring assembly (44).

14. The assembly of any one of claims 9 to 12, wherein said suspension member is a wheel assembly (52) including upper (54) and lower (56) control arms pivotally attached to a knuckle arm (60) at one end and to a frame member (62) at an end opposite said knuckle arm.

15. The assembly of any one of claims 9 to 12, wherein said suspension member is a stabilizer bar (48).

16. A hinge assembly (64) for a door (66) comprising;
a support (68);
a laminated bushing assembly (10) mounted along an axis (14) between said door (66) and said support (68) to provide for rotation of said door between an open and a closed position;
said laminated bushing including an inner (22) and outer (18) sleeve concentric about said axis (14), one of said inner and outer sleeves attached to said support and the other of said inner and outer sleeves attached to said door;
a spirally shaped cavity (20) disposed between said inner and outer sleeves;
a resilient material (16) disposed within said spirally shaped cavity; and
a plurality of grooves (28) disposed spirally along said axis in said inner sleeve, outer sleeve and said spirally shaped cavity such that resistance to movement of said resilient material in a direction transverse to said grooves is greater than resistance to movement in a direction substantially parallel to said grooves such that said inner sleeve is guided axially a distance proportional to relative rotation between said inner and outer sleeve.

17. The assembly of claim 16, wherein said axis (14) is vertical and said spirally wound grooves (28) directs movement of said door upward in proportion to relative rotation between said inner and outer sleeve, and a weight of said door exerted downward on said laminated bushing rotates said door toward said closed position

18. A method of forming a laminated bushing (10), said method including the steps of;
a. affixing a resilient material (16) to a metal sheet (12);
b. spirally winding said metal sheet back over said resilient material about an axis to form a spirally shaped cavity (20) such that said resilient material is disposed within said spirally shaped cavity;
**characterised in that** the method includes the steps of:
c. inserting said spirally shaped cavity within an outer sleeve (18) and without an inner sleeve (22) concentric about said axis;
d. forming a plurality of mechanically formed grooves within said metal sheet.

19. The method of claim 18, further including the step of mechanically compressing said resilient material (16) within said spirally shaped cavity (20).

20. The method of claim 18 or 19, wherein said resilient material (16) is rubber and further including the step of vulcanizing said rubber.

21. The method of any one of claims 18 to 20, wherein said metal sheet (12) is rolled in a length (70) and said laminated bushings are formed by cutting said length (70) into smaller required lengths.

22. The method of any one of claims 18 to 21 wherein said inner sleeve and said outer sleeve and spirally shaped cavity are formed from a common metal sheet.

## Patentansprüche

1. Verbundlagerbuchsenbaugruppe (10), umfassend:
eine innere (22) und eine äußere (18) Hülse, die zu einer Achse (14) konzentrisch sind;
einen spiralförmigen Hohlraum (20), der zwischen der inneren und äußeren Hülse angeordnet ist, wobei die innere Hülse (22), die äußere Hülse (18) und der spiralförmige Hohlraum (20) aus Metallblech (12) geformt sind,
ein elastisches Material (16), das im spiralförmigen Hohlraum angeordnet ist, um eine Relativbewegung zwischen der inneren und äußeren Hülse zu steuern, **dadurch gekennzeichnet, daß** die Lagerbuchse darüber hinaus mehrere Nuten (24, 26, 28) umfaßt, die im Metallblech so angeordnet sind, daß ein Widerstand gegenüber einer Bewegung des elastischen Materials in einer zu den Nuten quer verlaufenden Richtung größer ist als ein Widerstand gegenüber einer Bewegung in einer Richtung, die im wesentlichen parallel zu den Nuten liegt.

2. Lagerbuchse nach Anspruch 1, bei der die innere Hülse (22) und der spiralförmige Hohlraum (20) aus einem gemeinsamen Metallblech (12) geformt sind.

3. Lagerbuchse nach Anspruch 1 oder 2, bei der das elastische Material (16) mit dem Metallblech (12) festhaftend verbunden ist.

4. Lagerbuchse nach Anspruch 1 oder 2 oder 3, bei der das im spiralförmigen Hohlraum (20) angeordnete elastische Material (16) vom Metallblech (12) mechanisch komprimiert wird.

5. Lagerbuchse nach einem der vorhergehenden Ansprüche, bei das elastische Material (16) vulkanisierter Gummi ist.

6. Lagerbuchse nach einem der vorhergehenden Ansprüche, bei der die mehrere Nuten (24) senkrecht zur Achse (14) angeordnet sind.

7. Lagerbuchse nach einem der Ansprüche 1 bis 5, bei der die mehreren Nuten (26) parallel zur Achse (14) angeordnet sind.

8. Lagerbuchse nach einem der Ansprüche 1 bis 5, bei der die mehreren Nuten (28) spiralförmig entlang der Achse (14) angeordnet sind.

9. Aufhängungsbaugruppe für ein Fahrzeug, umfassend:
eine am Fahrzeug befestigte Halterung;
ein an der Halterung befestigtes Aufhängungselement (44, 52, 48); und
eine Verbundlagerbuchsenbaugruppe (10), die zwischen der Halterung und dem Aufhängungselement angebracht ist, um eine Bewegung des Aufhängungselements relativ zur Halterung zu steuern;
wobei die Verbundlagerbuchsenbaugruppe (10) ein Metallblech (12) umfaßt, das spiralförmig um eine Längsachse (14) gewickelt ist, um einen spiralförmigen Hohlraum (20) zu bilden, der innerhalb einer äußeren Hülse (18) angeordnet ist, und ein elastisches Material (16), das im spiralförmigen Hohlraum zwischen den Lagen des spiralförmig gewickelten Metallblechs angeordnet ist, wobei die Verbundlagerbuchse mehrere Nuten (24, 26, 28) umfaßt, die im Metallblech so angeordnet sind, daß ein Widerstand gegenüber einer Bewegung des elastischen Materials in einer zu den Nuten quer verlaufenden Richtung größer ist als ein Widerstand gegenüber einer Bewegung in einer Richtung, die im wesentlichen parallel zu den Nuten liegt.

10. Baugruppe nach Anspruch 9, bei der die mehrere Nuten (24) senkrecht zur Längsachse (14) angeordnet sind.

11. Baugruppe nach Anspruch 9, bei der die mehreren Nuten (26) parallel zur Längsachse (14) angeordnet sind.

12. Baugruppe nach Anspruch 9, bei der die mehreren Nuten (28) spiralförmig entlang der Längsachse angeordnet sind.

13. Baugruppe nach einem der Ansprüche 9 bis 12, bei der das Aufhängungselement eine Blattfederbaugruppe (44) ist.

14. Baugruppe nach einem der Ansprüche 9 bis 12, bei der das Aufhängungselement eine Radbaugruppe (52) ist, die einen oberen (54) und einen unteren (56) Lenkarm umfaßt, die an einem Ende schwenkbar an einem Gelenkarm (60) und an einem dem Gelenkarm entgegengesetzten Ende schwenkbar an einem Rahmenteil (62) befestigt sind.

15. Baugruppe nach einem der Ansprüche 9 bis 12, bei der das Aufhängungselement eine Stabilisatorstange (48) ist.

16. Schamierbaugruppe (64) für eine Tür (66), umfassend:
einen Träger (68);
eine Verbundlagerbuchsenbaugruppe (10), die entlang einer Achse (14) zwischen der Tür (66) und dem Träger (68) angebracht ist, um für eine Drehung der Tür zwischen einer offenen und einer geschlossenen Position zu sorgen;
wobei die Verbundlagerbuchse eine innere (22) und eine äußere (18) Hülse umfaßt, die konzentrisch zur Achse (14) sind, wobei die innere oder äußere Hülse am Träger befestigt ist und die jeweils andere Hülse an der Tür befestigt ist;
einen spiralförmigen Hohlraum (20), der zwischen der inneren und äußeren Hülse angeordnet ist;
ein elastisches Material (16), das im spiralförmigen Hohlraum angeordnet ist; und
mehrere Nuten (28), die spiralförmig entlang der Achse in der inneren Hülse, äußeren Hülse und dem spiralförmigen Hohlraum so angeordnet sind, daß ein Widerstand gegenüber einer Bewegung des elastischen Materials in einer zu den Nuten quer verlaufenden Richtung größer ist als ein Widerstand gegenüber einer Bewegung in einer Richtung, die im wesentlichen parallel zu den Nuten liegt, so daß die innere Hülse axial um eine Strecke geführt ist, die proportional zu einer Relativdrehung zwischen der inneren und äußeren Hülse ist.

17. Baugruppe nach Anspruch 16, bei der die Achse (14) vertikal liegt und die spiralförmig gewundenen Nuten (28) eine aufwärts gerichtete Bewegung der Tür proportional zu einer Relativdrehung zwischen der inneren und äußeren Hülse führen, und das nach unten auf die Verbundlagerbuchse ausgeübte Gewicht der Tür diese zur geschlossenen Position hin verschwenkt.

18. Verfahren zur Bildung einer Verbundlagerbuchse (10), wobei es folgende Schritte umfaßt:
a. Befestigen eines elastischen Materials (16) an einem Metallblech (12);
b. spiralförmiges Zusammenrollen des Metallblechs und elastischen Materials um eine Achse, um einen spiralförmigen Hohlraum (20) zu bilden, derart, daß das elastische Material im spiralförmigen Hohlraum angeordnet ist;
**dadurch gekennzeichnet, daß** das Verfahren folgende Schritte umfaßt:
c. Einsetzen des spiralförmigen Hohlraums in eine äußere Hülse (18) und um eine innere Hülse (22) herum, die konzentrisch zur Achse ist;
d. Bilden mehrerer mechanisch gebildeter Nuten im Metallblech.

19. Verfahren nach Anspruch 18, darüber hinaus den Schritt umfassend, das elastische Material (16) im spiralförmigen Hohlraum (20) mechanisch zu komprimieren.

20. Verfahren nach Anspruch 18 oder 19, bei dem das elastische Material (16) Gummi ist und darüber hinaus der Schritt enthalten ist, den Gummi zu vulkanisieren.

21. Verfahren nach einem der Ansprüche 18 bis 20, bei dem das Metallblech (12) in einer Stücklänge (70) gerollt wird und die Verbundlagerbuchsen gebildet werden, indem man die Stücklänge (70) zu kleineren, benötigten Stücklängen zerschneidet.

22. Verfahren nach einem der Ansprüche 18 bis 21, bei dem die innere Hülse, die äußere Hülse und der spiralförmige Hohlraum aus einem gemeinsamen Metallblech gebildet werden.

## Revendications

1. Ensemble (10) de coussinet stratifié comprenant :
- un manchon interne (22) et externe (18) concentrique autour d'un axe (14) ;
- une cavité en forme de spirale (20) disposée entre lesdits manchons interne et externe, ledit manchon interne (22), ledit manchon externe (18) et ladite cavité en forme de spirale (20) étant formés à partir d'une feuille métallique (12),
- un matériau élastique (16) disposé à l'intérieur de ladite cavité en forme de spirale pour contrôler le déplacement relatif entre lesdits manchons interne et externe, **caractérisé en ce que** le coussinet comprend en outre une pluralité de rainures (24, 26, 28) disposées dans ladite feuille métallique, de telle sorte que la résistance au déplacement dudit matériau élastique dans une direction transversale auxdites rainures est plus grande que la résistance au déplacement dans une direction sensiblement parallèle auxdites rainures.

2. Coussinet selon la revendication 1, dans lequel ledit manchon interne (22), et ladite cavité en forme de spirale (20) sont formés d'une feuille métallique commune (12).

3. Coussinet selon la revendication 1 ou 2, dans lequel ledit matériau élastique (16) adhère à ladite feuille métallique (12).

4. Ensemble selon la revendication 1 ou 2 ou 3, dans lequel ledit matériau élastique (16) disposé à l'intérieur de ladite cavité en forme de spirale (20) est mécaniquement comprimé par ladite feuille métallique (12).

5. Ensemble selon l'une quelconque des revendications précédentes, dans lequel ledit matériau élastique (16) est du caoutchouc vulcanisé.

6. Coussinet selon l'une quelconque des revendications précédentes, dans lequel lesdites pluralités de rainures (24) sont disposées perpendiculairement audit axe (14).

7. Coussinet selon l'une quelconque des revendications 1 à 5, dans lequel ladite pluralité de rainures (26) sont disposées parallèlement audit axe (14).

8. Coussinet selon l'une quelconque des revendications 1 à 5, dans lequel ladite pluralité de rainures (28) sont disposées en spirale le long dudit axe (14).

9. Ensemble de suspension pour un véhicule à moteur, comprenant :
- un support fixé audit véhicule à moteur ;
- un organe de suspension (44, 52, 48) fixé audit support ; et
- un ensemble de coussinet stratifié (10) montée entre ledit support et ledit organe de suspension pour contrôler le déplacement dudit organe de suspension par rapport audit support ;
ledit ensemble de coussinet stratifié (10) comprenant une feuille métallique (12) enroulée en spirale autour d'un axe longitudinal (14) pour former une cavité en forme de spirale (20) disposée à l'intérieur d'un manchon externe (18) et un matériau élastique (16) disposé à l'intérieur de ladite cavité en forme de spirale et entre ladite feuille métallique enroulée en spirale, dans lequel ledit coussinet stratifié comprend une pluralité de rainures (24, 26, 28) disposées dans ladite feuille métallique de telle sorte que la résistance au déplacement dudit matériau élastique dans une direction transversale auxdites rainures soit plus grande que la résistance au déplacement dans une direction sensiblement parallèle auxdites rainures.

10. Ensemble selon la revendication 9, dans lequel ladite pluralité de rainures (24) sont disposées perpendiculairement audit axe longitudinal (14).

11. Ensemble selon la revendication 9, dans lequel ladite pluralité de rainures (26) sont disposées parallèlement audit axe longitudinal (14).

12. Ensemble selon la revendication 9, dans lequel ladite pluralité de rainures (28) sont disposées en spirale le long dudit axe longitudinal.

13. Ensemble selon l'une quelconque des revendications 9 à 12, dans lequel ledit organe de suspension est un ensemble de ressort à lames (44).

14. Ensemble selon l'une quelconque des revendications 9 à 12, dans lequel ledit organe de suspension est un ensemble de roue (52) comprenant des bras de contrôle de suspension supérieur (54) et inférieur (56) attachés à pivotement à un bras d'articulation (60) à une extrémité et à un organe de cadre (62) à une extrémité opposée audit bras d'articulation.

15. Ensemble selon l'une quelconque des revendications 9 à 12, dans lequel ledit organe de suspension est une barre stabilisatrice (48).

16. Ensemble de charnière (64) pour une porte (66) comprenant :
- un support (68) ;
- un ensemble de coussinet stratifié (10) monté le long d'un axe (14) entre ladite porte (66) et ledit support (68) pour assurer la rotation de ladite porte entre une position ouverte et une position fermée ;
- ledit coussinet stratifié comprenant un manchon interne (22) et externe (18) concentrique autour dudit axe (14), l'un desdits manchons interne et externe étant attaché audit support et l'autre desdits manchons interne et externe étant attaché à ladite porte ;
- une cavité en forme de spirale (20) disposée entre lesdits manchons interne et externe ;
- un matériau élastique (16) disposé à l'intérieur de ladite cavité en forme de spirale ; et
- une pluralité de rainures (28) disposées en spirale le long dudit axe dans ledit manchon interne, le manchon externe et ladite cavité en forme de spirale de telle sorte que la résistance au déplacement dudit matériau élastique dans une direction transversale auxdites rainures soit plus grande que la résistance au déplacement dans une direction sensiblement parallèle auxdites rainures de manière que ledit manchon interne soit guidé axialement sur une distance proportionnelle à la rotation relative entre lesdits manchons interne et externe.

17. Ensemble selon la revendication 16, dans lequel ledit axe (14) est vertical et lesdites rainures enroulées en spirale (28) dirigent le déplacement de ladite porte vers le haut en proportion à la rotation relative entre lesdites manchons interne et externe, et le poids de ladite porte exercé vers le bas sur ledit coussinet stratifié fait tourner ladite porte vers ladite position fermée.

18. Procédé de formation d'un coussinet stratifié (10), ledit procédé comprenant les étapes consistant à :
a. fixer un matériau élastique (16) sur une feuille métallique (12) ;
b. enrouler en spirale ladite feuille métallique autour dudit matériau élastique autour d'un axe pour former une cavité en forme de spirale (20) de telle sorte que ledit matériau élastique soit disposé à l'intérieur de ladite cavité en forme de spirale ;
**caractérisé en ce que** le procédé comprend les étapes consistant à :
c. insérer ladite cavité en forme de spirale à l'intérieur d'un manchon externe (18) et sans manchon interne (22) concentrique autour dudit axe ;
d. former une pluralité de rainures mécaniquement formées à l'intérieur de ladite feuille métallique.

19. Procédé selon la revendication 18, comprenant en outre l'étape consistant à comprimer mécaniquement ledit matériau élastique (16) à l'intérieur de ladite cavité en forme de spirale (20).

20. Procédé selon la revendication 18 ou 19, dans lequel ledit matériau élastique (16) est du caoutchouc et comprend en outre l'étape consistant à vulcaniser ledit caoutchouc.

21. Procédé selon l'une quelconque des revendications 18 à 20, dans lequel ladite feuille métallique (12) est enroulée sur une longueur (70) et lesdits coussinets stratifiés sont formés en découpant ladite longueur (70) en plus petites longueurs requises.

22. Procédé selon l'une quelconque des revendications 18 à 21, dans lequel ledit manchon interne et ledit manchon externe et la cavité en forme de spirale sont formés à partir d'une feuille métallique commune.
